# EUROPEAN PATENT APPLICATION

(11) **EP 0 693 370 A2**
(43) Date of publication of application: **24.01.1996**
(21) Application number: 95111236.6
(22) Date of filing: 18.07.1995
(51) Int. Cl.: B32B 31/00, B32B 17/04, B29C 70/30, B44C 3/02

(54) **Method for producing material for ornamental panelling elements, particularly for cars, and material obtained with such a method**

(30) Priority: 19.07.1994 IT TO940590
(71) Applicant: FOGGINI PROGETTI S.r.l., I-10092 Beinasco Torino (IT)
(72) Inventor: Foggini, Paolo, I-10024 Moncalieri (Prov. Torino) (IT)
(74) Representative: Modiano, Guido, Dr.-Ing.

(57) **Abstract**

The method consists in forming a stacking (I) of different materials, separated by thermosetting adhesive, meant to form the support material, in laying on the last layer (F₄) of the stacking an in sight layer (SV) of carbon fiber fabric, by interposing an epoxy resin film (Fe) of a thickness not greater than 5-10% of said fabric thickness, in submitting the resulting stacking to molding and formation with molding pressures comprised between 4 and 6 kg/cm and a temperature comprised between 60 and 100°C, in withdrawing the molded product from the mold and in submitting it to at least one surface finishing step by spraying epoxy resin (VE), on the in sight layer (SV) of the product.

## Description

The present invention relates to a method for producing material for ornamental panelling elements, particularly for cars, and to the material obtained with such a method.

It is known that in vehicles, and especially in luxury cars, ornamental panels of valuable wood, such as briar-wood or the like, are often used for covering parts of the dashboard, doors of the glove compartments, lids for ashtrays, parts of the central console and of the doors of the vehicle.

The tendency in modern cars is to replace this traditional and expensive ornamental panelling with another type made of synthetic material having an in sight surface with a particular and pleasant aesthetical appearance, obtainable industrially, moldable and thus economically advantageous.

A modern panelling of the synthetic type, the use whereof is rapidly spreading, is obtained by associating to a moldable material support, a superficial layer constituted by carbon fiber fabric impregnated with epoxy resin. The aesthetical appearance of this material, in which the fabric appears in transparency, is very appealing provided that the superficial layer does not undergo, during the molding step, excessive irreversible crushing deformations, which deprive the finished material of the "depth" effect constituting the aesthetical element of greater value.

Currently the above-mentioned material is produced either through industrial processes by press moulding, thus sacrificing at least in part said aesthetical effect to the benefit of productivity and costs, or with substantially manual procedures which do not affect the "depth" effect given to the material by the carbon fabric layer however causing a reduction in productivity and high production costs.

In the first case, a sandwich support, for example of fiber glass and/or wood, and/or aluminium layers alternated with thermosetting adhesive, is covered with a surface layer of carbon fiber impregnated with epoxy resin in an intermediate polymerization stage (stage B or prepeg).

Subsequently the moulding in heated mold is carried out, during which the complete polymerization of the epoxy resin occurs by applying a moulding pressure comprised between 5 and 7 kg/cm. Said moulding pressure causes the irreversible crushing of the carbon fabric fibers and the resulting aesthetic degradation of the material, which, upon withdrawal from the mold, does not require further operations, thus the system achieves a high productivity and remarkable economical advantages however providing a material having mediocre aesthetical appearance.

In the second production method which is substantially manual, an already molded support is used on which in succession a layer of epoxy resin, the carbon fiber fabric and a further layer of epoxy resin are laid.

The resin polymerization is carried out in a furnace provided with a thermostat, but in the absence of molding pressure, thus the carbon fabric fibers do not suffer any crushing and the finished product maintains the mentioned desirable "depth" effect.

Naturally, the yield of such substantially manual production process is very reduced, so that the product has a high unitary cost which is sometimes out of proportion with respect to the intrinsic value of the product itself. Furthermore, the pre-molding of the support sometimes makes it difficult to correctly apply the carbon fiber fabric which, obviously, must adhere completely to the support itself, and for this reason the latter cannot have too marked curvatures or recesses.

Starting from the above mentioned known production processes, the present invention aims at eliminating the drawbacks and at summing up the advantages thereof.

A principal aim of the invention is therefore to provide a method for producing ornamental panelling materials of the mentioned type- briefly panellings with fabric effect- allowing moulding of the support and application of the carbon fabric layer through an industrial heat molding process, which, at the same time, does not cause the irreversible deformation by crushing of said fabric fibers, so that the finished product maintains unchanged the depth effect given to it by the complete integrity of such fibers.

Another object of the invention is to provide a simplified production method, which is economical and adapted to the production of ornamental panels with any profile and even with extended dimensions.

This aim, object and others are achieved, according to the present invention, with a method having the specific features set forth in the appended claims.

Substantially, the invention is based on the concept of arranging in a mold the stack of layers which form the support, separated by thermosetting adhesive, of laying onto the last layer of the stack an epoxy resin film having a thickness which is not greater than 5-10% of the carbon fiber fabric thickness, of laying onto said film the carbon fiber fabric and submitting the resulting stacking to molding with pressures comprised between 4 and 6 kg/cm and a temperature comprised between 60 and 100° C.

In this way, the epoxy resin layer affects only a limited thickness of the lower part of the carbon fabric fibers, securing the anchoring thereof to the support, but does not involve the main part of the fibers proper, which, upon opening of the mold resume - but for a slight hysteresis- their original configuration adapted to give the finished item the desired depth effect.

After withdrawal from the mold, at least one finishing step is carried out consisting in spraying the in sight surface of the product obtained by moulding with epoxy paint, which has the double function of binding the carbon fabric fibers and render plane the in sight surface.

The features, the aims and the advantages of the production method according to the invention, will become apparent from the following detailed description, and with reference to the appended drawings, provided only by way of non-limitative example, in which:

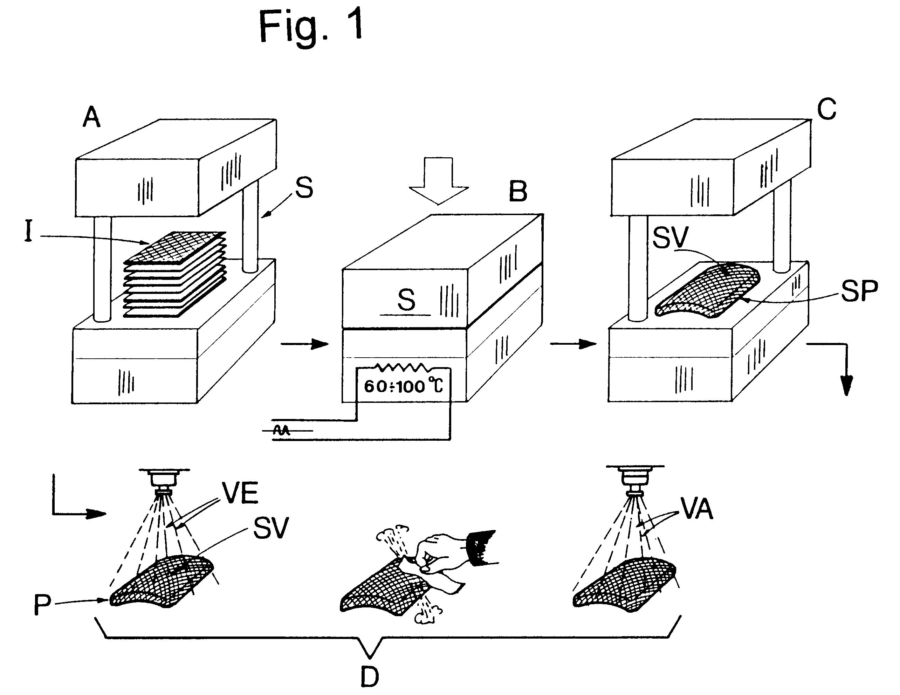

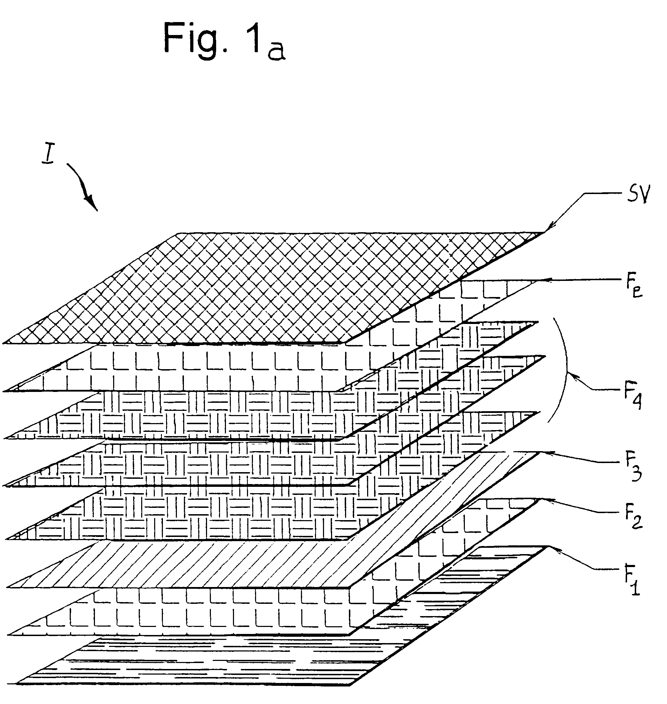

- figure 1 is a schematic view showing in sequence the characterizing steps of the method;
- figure 1a is an enlarged scale view of a detail of figure 1.

With reference to figure 1, the initial step A of the method consists in molding, in a mold S of the thermostated half-shell type, a stacking I of layers for forming a support of any profile, the layers being separated by a thermosetting resin based adhesive.

Figure 1a shows that the stacking I is, for example composed, in sequence from bottom to top, of a base sheet F₁ of balsa wood, of a thermosetting adhesive intermediate sheet F₂ , of an intermediate balsa wood sheet F₃ arranged with the fibers perpendicularly to those of the sheet F₁, and of a set of three sheets of fiber glass material impregnated with thermosetting resin constituting altogether the final layer F₄.

According to the invention, on the last layer F₄ an epoxy paper film Fe is laid having a thickness comprised between 90 and 120 micron, and on the film Fe the in sight layer SV is laid, which is constituted by carbon fiber fabric the average thickness whereof ranges from 4 to 6 times greater than the thickness of the film Fe, and is thus comprised between 3,5 and 7,5 tenth of millimeter.

The stacking I composed as above is then submitted to a second method step B, or moulding step, in which the mold S is closed, subjected to a clamping force adapted to exert on the stacking I a pressure comprised between 4 and 6 kg/cm and thermostated at a temperature comprised between 60 and 100°C.

After a moulding time sufficient to allow complete polymerization of the epoxy paper film Fe and of the impregnating resins of the last layer F₄ as well as the complete hardening of the thermosetting adhesive interposed between the layers F₁-F₂-F₃, step C is carried out consisting of withdrawing the molded support SP bearing the in sight layer SV which resumes substantially the configuration of the original fabric. This is due to the fact that the epoxy resin of the film Fe affects, in the molding step, only a limited thickness (5-10%) of the lower part of the carbon fabric fibers which, while being firmly anchored to the underlying support, when the molding pressure stops, resume substantially their original dimensions adapted to give the finished item a depth aspect deriving from the substantially unchanged thickness of the in sight layer SV.

After withdrawal from the mold, a finishing step D is carried out, consisting in sequence, of spraying the product P obtained by molding with epoxy paint VE, which has the double function of binding the carbon fabric fibers to the in sight layer SV and rendering plane said in sight surface, of abrading said plane surface and of covering said abraded surface with a finishing acrylic paint VA.

The finished product is characterized by a perfectly smooth in sight surface having a fabric warping in transparency with a marked embossing effect.

Naturally, while maintaining the principle of the invention, the details in carrying out the steps of the method as well as the composition of the support layers may be extensively varied, with respect to what has been described and illustrated by way of non-limitative example, without departing from the scope of the invention defined in the appended claims in which the reference signs are included only for the purpose of increasing the intelligibility of the claims and accordingly, do not have any limiting effect on the interpretation of each element identified by way of example by such reference signs.

## Claims

1. Method for producing materials for ornamental panelling elements comprising a final in sight layer of carbon fiber fabric, particularly for cars, characterized in that it consists in forming a stacking (I) of layers (F₁-F₂-F₃-F₄) made of different materials, separated by thermosetting adhesive, meant to form the support material, in laying on the last layer (F₄) of the stacking an epoxy resin film (Fe) of a thickness which is not greater than 5-10% of the carbon fiber fabric thickness (SV) forming the in sight layer, in laying on said film said carbon fiber fabric (SV), in submitting the resulting stacking to molding and formation with molding pressures comprised between 4 and 6 kg/cm and a temperature comprised between 60 and 100°C, in withdrawing the molded product from the mold and in submitting it to at least one surface finishing step consisting in spraying, on the in sight layer (SV) of said product, epoxy resin (VE) having the double purpose of binding the carbon fabric fibers and rendering plane the surface of said in sight layer.

2. Method according to claim 1, wherein said epoxy resin film (Fe) is constituted by an epoxy paper layer of a thickness comprised between 90 and 120 micron.

3. Method according to claims 1 and 2, characterized in that the epoxy resin film (Fe) impregnates, during molding, the lower portion of the carbon fibers of the fabric constituting the in sight layer (SV) and in that said impregnation affects 5-10% of the overall thickness of the fibers in order to secure their anchoring to the underlying stratified support and to allow the remaining portion of the fibers to resume, after molding, their own initial configuration.

4. Material for ornamental panelling elements with fabric effect, obtained by the method according to claims 1 to 3, characterized in that it comprises a stratified support (SP) formed by molding and a perfectly smooth in sight surface (SV) showing in transparency a fabric warping with a marked depth effect.
